# EUROPEAN PATENT APPLICATION

(11) **EP 4 787 162 A1**
(43) Date of publication of application: **05.08.2026**
(21) Application number: 26154661.8
(22) Date of filing: 28.01.2026
(51) Int. Cl.: G06F 9/455, H04L 12/40

(54) **VIRTUALIZED PARALLEL REDUNDANCY PROTOCOL FOR FAULT-TOLERANT NETWORK SYSTEMS**

(30) Priority: 31.01.2025 US 202519042635
(71) Applicant: VMware LLC, Palo Alto, CA 94304 (US)
(72) Inventor: Doshi, Ronak, San Jose, 95134 (US); Yang, Guolin, San Jose, 95120 (US); Ang, Boon Seong, Saratoga, 95070 (US)
(74) Representative: Dilg, Haeusler, Schindelmann Patentanwaltsgesellschaft mbH

(57) **Abstract**

An example computing system includes: a hardware platform having a central processing unit (CPU), a memory, a first network interface controller (NIC) coupled to a first network, and a second NIC coupled to a second network; software executing on the hardware platform, the software including a hypervisor and a virtual machine (VM) managed by the hypervisor, the software including first software executing in the VM and configured to send a packet to a device, the software including a virtual switch executing in the hypervisor; wherein the virtual switch is configured to receive the packet from the first software, insert a sequence number in the packet, duplicate the packet into a first packet and a second packet, send the first packet to the device over the first network through the first NIC, and send the second packet to the device over the second network through the second NIC.

## Description

### BACKGROUND

Industrial manufacturers desire to modernize their shop floors. One device in the modern shop floor can be a programmable logic controller (PLC) configured to control input/output (IO) devices through a network. The IO devices can include sensors, actuators, and the like. A PLC can operate effectively given predictable and deterministic execution latency. For example, some setups can use Parallel Redundancy Protocol (PRP) in the network for redundancy and availability of the communication path between the PLC and the IO devices.

PRP can be used in industrial and other network environments for fault tolerance and redundancy. In one type of PRP setup, duplicate packets can be sent through two parallel network paths to ensure redundancy. If one network path fails, communication can be maintained via the other network path. In some cases, the environment can be virtualized, such as a data center that virtualizes hardware resources (e.g., virtual machines (VMs), virtual networks, virtual storage, etc.). Implementing PRP in virtualized environments can present specific challenges. For example, a VM or virtual network interface may not have direct access to distinct physical network links in order to send packets through parallel network paths. Virtual networks can be implemented by virtual switches, software-defined networking, and overlay networks. These virtual network components may operate over the same physical infrastructure, limiting the redundancy that PRP aims to provide. Further, in a virtualized environment, replicating and managing network packets can introduce significant resource overhead and increased latency.

### SUMMARY

In an embodiment, a computing system can include a hardware platform having a central processing unit (CPU), a memory, a first network interface controller (NIC) coupled to a first network, and a second NIC coupled to a second network. The computing system can include software executing on the hardware platform, the software including a hypervisor and a virtual machine (VM) managed by the hypervisor, the software including first software executing in the VM and configured to send a packet to a device, the software including a virtual switch executing in the hypervisor. The virtual switch can be configured to receive the packet from the first software, insert a sequence number in the packet, duplicate the packet into a first packet and a second packet, send the first packet to the device over the first network through the first NIC, and send the second packet to the device over the second network through the second NIC.

Further embodiments include a non-transitory computer-readable storage medium comprising instructions that cause a computer system to carry out the above method, as well as a computer system configured to carry out the above method.

### BRIEF DESCRIPTION OF THE DRAWINGS

Fig. 1 is a block diagram depicting a computing system according to some embodiments.
Fig. 2 is a block diagram depicting a computer according to some embodiments.
Fig. 3 is a flow diagram depicting a method of handling packet transmission in a computing system according to some embodiments.
Fig. 4 is a flow diagram depicting a method of handling packet reception in a computing system according to some embodiments.

### DETAILED DESCRIPTION

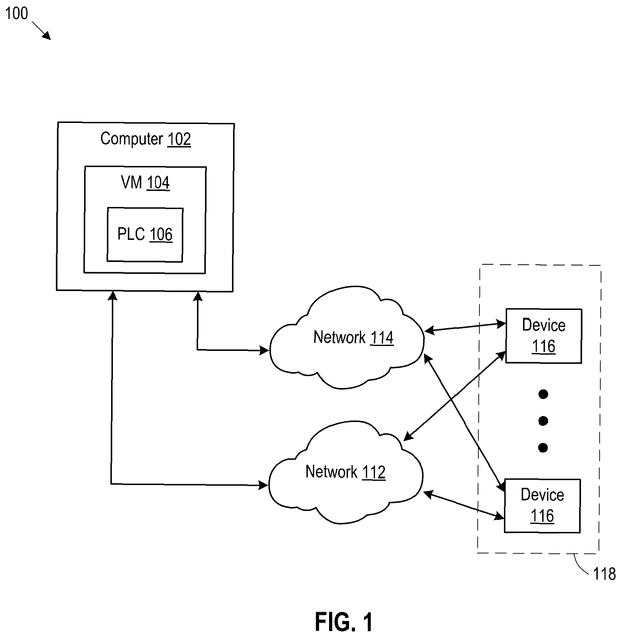

Fig. 1 is a block diagram depicting a computing system 100 according to some embodiments. Computing system 100 can include a computer 102, a network 112, a network 114, and a plurality of devices 116. A computer may be an electronic device for storing and processing data. A device may be any electric device capable of communication with a network. A network may be devices connected by network nodes for communication with one another. The devices can range from computing devices (e.g., personal computers, smartphones, wearables, etc.) to devices such as sensors, actuators, and the like. A network node may be a connection point in the network. Example network nodes include network switches, network hubs, network bridges, network routers, wireless access points, and the like. The scope of a network can differ depending on context. For example, a network can be devices connected to a single network switch. Thus, a network switch (also referred to as a switch) may be a network node that connects devices to create a network. A network can be devices connected to multiple switches. A network can be devices connected to one or more switches and a network router. A network router (also referred to as a router) may be a network node that can connect multiple switches and hence form a larger network. A network can be devices and network nodes disposed at a location, which can be referred to as a local area network (LAN). A network can be multiple connected LANs, which can be referred to as a wide area network (WAN). The public Internet is an example of a WAN. As used herein, the term network can have any scope unless otherwise confined, such as by location, by type, by a set of network nodes, etc.

Communication between devices on a network can be organized into layers, such as the layers defined by the well-known Open Systems Interconnection (OSI) model. The physical layer (also known as layer 1) may be the layer that provides an electrical, mechanical, and procedural interface to the transmission medium. The transmission medium may be the physical pathways through which data can be transmitted. The transmission medium can be wireline (e.g., twisted pair cable, coaxial cable, optical fiber cable, etc.), wireless, or a combination thereof. The data link layer (also known as layer 2) may be the layer that transfers data between network nodes using addresses for device identification while ensuring reliable transmission across the transmission medium. Ethernet is a widely used and well-known networking technology that implements the data link layer in a network. The network layer (also known as layer 3) may be the layer responsible for determining how data is transmitted between devices across different networks. Internet Protocol (IP) is a widely used and well-known networking technology that implements the network layer in a network. A primary role of the network layer is routing, which may be the process that ensures data is sent to the correct destination even when passing through multiple networks.

Computer 102 can be in communication with devices 116 through network 114 and network 112. Each device 116 can be coupled to each of network 112 and network 114. Devices 116 can be disposed in an environment 118, such as an industrial automation environment or any of a myriad of environments using devices, such as sensor, actuators, and the like. In some embodiments, computing system 100 can use a parallel redundancy protocol (PRP), such as the PRP defined in IEC standard 62439-3. A PRP may be a protocol that communicates using duplicated packets across multiple independent networks. A packet may be a unit of data (e.g., an Ethernet frame, an IP packet, etc.). By sending duplicate packets over two independent networks, PRP can ensure that systems can continue operation without interruption, even if one of the two paths experiences a fault. In some embodiments, network 112 can be a first network and network 114 can be a second network and network 112 can be independent from network 114. Networks can be independent when they include different network devices and different cabling. For example, computer 102 can be coupled to one network device (e.g., a network switch) in network 114 and another network device (e.g., another network switch) in network 112 using two different transmission media (e.g., a first cable to the first network device and a second cable to the second network device). Likewise, each device 116 can be coupled to different network switches in network 112 and network 114 using different transmission media.

Devices 116 can be under control of a programmable logic controller (PLC) 106. A PLC may be a component that controls a process, such as a manufacturing process (e.g., an assembly line, machines, robotic devices, etc., which encompass devices 116). Computer 102 can implement a PLC. In some embodiments, computer 102 can execute software implementing a PLC 106. In some embodiments, PLC 106 can execute within a virtual machine (VM) 104. Software may be instructions executed by a processor of a computer. PLC 106 can send data to devices 116 in packets over networks 112 and 114. PLC 106 can receive data from devices 116 in packets over networks 112 and 114. Virtualization of computer 102 and PRP is discussed below.

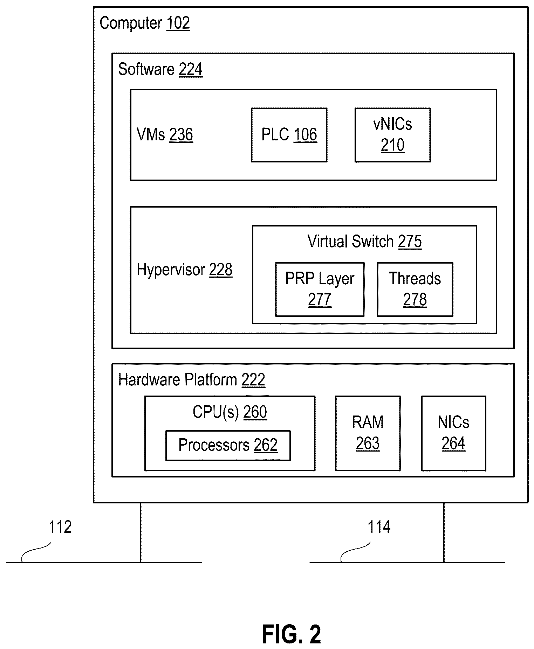

Fig. 2 is a block diagram depicting computer 102 according to some embodiments. Computer 102 can include software 224 executing on hardware platform 222, such as an x86 architecture platforms or an ARM platform. A hardware platform may be conventional components of a computing device, such as one or more central processing units (CPUs) 260, system memory (e.g., random access memory (RAM) 263), network interface controllers (NICs) 264. A CPU may be an integrated circuit (IC) that can execute software to process data (e.g., an x86 CPU, an ARM CPU, etc.). Memory may be a device that can store data. RAM may be a memory that can be read and written in any order (e.g., random-access). A NIC may be a device that can connect a computer to a network. CPUs 260 are configured to execute instructions, for example, executable instructions that perform one or more operations described herein, which may be stored in RAM 263. NICs 264 enable host 106 to communicate with other devices through network 112 and network 114. CPU(s) 260 can include processors 262. A processor can be a unit that can execute instructions. A processor can be a physical unit in CPU(s) 260 (e.g., sometimes referred to as a "core" of a CPU). A processor can be a logical unit in CPU(s) 260 (e.g., a physical core of a CPU can be divided into virtual cores that are treated as physical cores by hypervisor 228, sometimes referred to as "hyperthreading").

Software 224 can provide a virtualization layer, referred to herein as a hypervisor 228, which directly executes on hardware platform 222. In an embodiment, there is no intervening software, such as a host operating system (OS), between hypervisor 228 and hardware platform 222. Thus, hypervisor 228 can be a Type-1 hypervisor (also known as a "bare-metal" hypervisor). Hypervisor 228 can abstract processor, memory, storage, and network resources of hardware platform 222 to provide a virtual machine execution space within which multiple virtual machines (VM) 236 may be concurrently instantiated and executed. Software executes in VMs 236. For example, a VM 236 can execute PLC 106 and virtual network interface cards (vNICs) 210. A vNIC may be a software implementation of a NIC.

Hypervisor 228 can include a virtual switch 275. A network switch may be a device that forwards packets between other devices connected to the network switch (e.g., Ethernet frames). A virtual switch may be a software implementation of a network switch. Virtual switch 275 can include ports that provide an input/output interface to virtual switch 275. Virtual NICs 210 in VMs 236 can be connected to ports of virtual switch 275 (through software of hypervisor 228) to enable communication between VMs 236 and virtual switch 275. Virtual switch 275 can communicate with NICs 264 in hardware platform 222. Virtual switch 275 can include a PRP layer 277 and threads 278. A PRP layer may be software that implements a parallel redundancy protocol. A thread may be a sequence of instructions executed by a CPU. Hypervisor 228 can include many threads executing on processors 262 of CPUs 206, including threads 278 of virtual switch 275.

As noted above, in a virtualized environment, implementing PRP can present some challenges. A VM or vNIC may not have direct access to a NIC of the computer's hardware platform, since the NICs are controlled and virtualized by the hypervisor for use by multiple concurrent VMs. A virtualized environment can include a software-defined network (SDN). An SDN may be a software implementation of a network, including software implementations of network nodes (e.g., switches, routers, etc.). A virtualized environment can include multiple SDNs, which are logically distinct, but which also operate using the same physical network (e.g., the same LAN). This can limit the redundancy PRP aims to provide (e.g., sending duplicate packets over two SDNs may result in the packets being sent over the same physical network without redundancy). In a virtualized environment, replicating and managing packet duplication in PRP can result in significant resource overhead and increased latency. In a virtualized environment, a VM that is executing a PLC can be migrated from one computer to another computer. Changing the physical computer on which a PLC executes can also result in a change of the physical network infrastructure being used (e.g., can result in a loss of redundancy).

PRP layer 277 in virtual switch 275 can provide deterministic latency for execution of PLC 206 in VM 236. A goal of PRP can be to provide redundancy of physical network paths. To achieve this goal, a PRP can duplicate the packets and send the duplicated packets over two separate network paths (e.g., LAN 112 and LAN 114). On the receiving end, one packet is processed while the duplicate packet is discarded. A PRP entity (e.g., a device 106 or virtual switch 275) can have two tasks: (1) Handling of duplicates: The PRP entity can append a redundancy check trailer (RCT) including a sequence number to each packet it receives. The RCT can ensure that the PRP entity can distinguish between duplicate frames. When the PRP entity receives a packet with a sequence number it as already seen, the PRP entity can discard the duplicate packet. (2) Management of redundancy: The PRP entity can periodically send a supervision packet and can evaluate the supervision packets sent by other PRP entities.

A packet can include a header and a payload. A header of a packet may be information about the packet's contents. A payload of a packet may be the contents, e.g., data. A packet header, for example, can include information about the origin and destination of a packet. An RCT may be a portion of a packet header (e.g., a PRP can insert an RCT in a packet header). A sequence number may be a number in a sequence of numbers (e.g., a number between a start value and an end value). A supervision packet may be a packet sent by a PRP entity to announce its presence and status.

In some embodiments, PRP layer 277 can function as a software-based PRP layer and can ensure redundancy across multiple network paths. Hardware platform 222 includes physical NICs, e.g., NICs 264, connected to multiple different physical network paths, e.g., LAN 112 and LAN 114. PRP layer 277 can perform packet duplication and send the duplicate packets out through two different NICs 264 over LAN 112 and LAN 114. PRP layer 277 can perform functions in both the transmit direction and the receive direction. In the transmit direction, PRP layer 277 can receive packets from PLC 106 in VM 236 through vNIC(s) 210. PRP layer 277 can add RCT trailers to the packets. PRP layer 277 can send, for each pair of duplicated packets, one packet out a NIC 264 connected to LAN 112 and the other packet out a NIC 26 4 connected to LAN 114. In the receive direction, PRP layer 277 can receive packets from LAN 112 and LAN 114 through NICs 264. PRP layer 277 can detect duplicate packets using their RCT trailers. PRP layer 277 can discard duplicate packets. PRP layer 277 can remote RCT trailers from the remaining packets. PRP layer 277 can forward the remaining (non-duplicate) packets to PLC 106 in VM 236 through vNIC(s) 210. PRP layer 277 can also generate supervision packets on behalf of PLC 106. PRP layer 277 can send supervision packets to other PRP entities in the system (e.g., devices 106, other PLCs, etc.).

Since PLC 106 may be used in critical infrastructure, it is desirable to optimize allocation of resources in computer 102. In some embodiments, virtual switch 275 can execute on a set of processors 262 that is dedicated to virtual switch 275 (e.g., one or more processors 262). That is, one or more processors 262 can exclusively execute threads 278 of virtual switch 275 and no other threads of hypervisor 228 and VMs 236. In some embodiments, a thread 278 of virtual switch 275 can manage a transmit queue and receive queue of a vNIC 210. A transmit queue may be a queue of packets to be transmitted, e.g., from PLC 106. A receive queue may be a queue of packets received and to be processed, e.g., by PLC 106. In some embodiments, a NIC 264 can deliver packets to hypervisor 228 in multiple receive queues that can be processed separately (e.g., sometimes referred to as NetQueue). Thread 278 that manages the transmit/receive queues of vNIC 210 can receive packets from a NIC 264 and deliver the packets to the receive queue of vNIC 210. This can reduce latency, as packets are handled by a single thread 278 for a vNIC 210. In some embodiments, VM 236 can be configured as a latency-sensitive VM, where hypervisor 228 allocates some processors 262 exclusively to the VM.

A PRP protocol can require that each entity in the system is aware of each other entity. PRP layer 277 can include a thread that, at fixed intervals, can generate supervision packets on behalf of PLC 106. This allows other entities in the system to be aware of PLC 106. In some embodiments, PRP layer 277 also duplicates each supervision packet. To optimize packet allocation, PRP layer 277 can pre-allocate some packets (e.g., generate some number of packets). PRP layer 277 can use packets from the set of pre-allocated packets for the supervision packets. This can avoid processing spent on allocating new packets each time for duplications of supervision frames.

In a virtualized environment, there is a possibility of out-of-order packets. Out-of-order packets may be some packets that were transmitted earlier than other packets being received later than these other packets (e.g., a first packet transmitted followed by second packet transmitted, where the second packet is received before the first packet). Some PRP protocols do not handle out-of-order packets, instead just delivering the packets to the PRP entity as received. In some embodiments, PRP layer 277 can handle out-of-order packets by detecting out-of-order packets using the sequence numbers in the RCT trailers. PRP layer 277 can discard packets that are received out-of-order (which can result in the originator of the packets resending the packets).

As discussed above, a VM can migrate from one computer to another. A migration may be moving a VM executing on one computer to execute on another computer. PRP layer 277 can detect a migrated VM and generate new supervision packets for PLC 106 in the migrated VM. The new supervision packets indicate the change in computers due to the migration. On the new computer, PRP layer 277 can reset the sequence numbers used in the RCT trailers (e.g., reset to the starting sequence number).

When a packet is sent by PLC 106, the packet can have its checksum offloaded, e.g., the checksum of the packet header can be calculated in the hardware before being sent over the network. However, when PRP layer 277 adds the RCT trailer, the hardware may be unaware of this addition and then incorrectly calculate the checksum. Thus, in some embodiments, PRP layer 277 can itself calculate the checksum of the packet, add the RCT trailer to the packet, and then duplicate the packet.

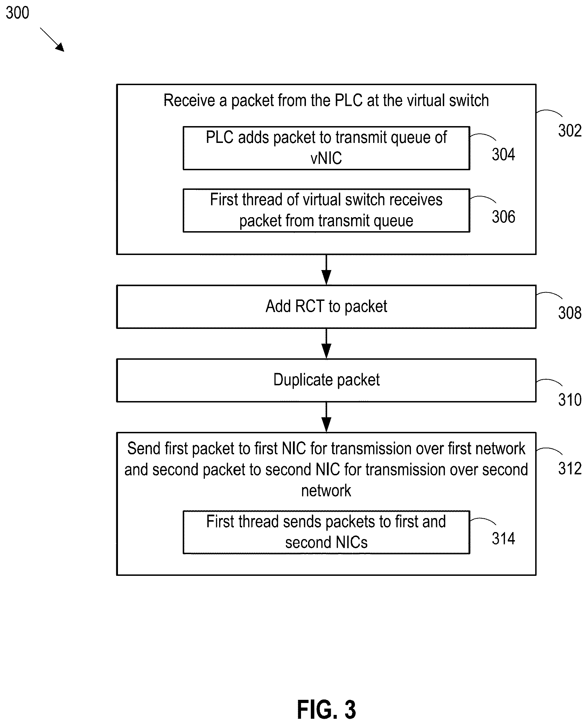

Fig. 3 is a flow diagram depicting a method 300 of handling packet transmission in a computing system according to some embodiments. Method 300 begins at step 302, where virtual switch 275 receives a packet from PLC 106. For example, at step 304, PLC 106 can add the packet to a transmit queue of vNIC 210. At step 306, a first thread (a thread 278) of virtual switch 275 receives the packet from the transmit queue of vNIC 210.

At step 308, virtual switch 275 adds an RCT to the packet. The RCT can include the next sequence number. At step 310, virtual switch 275 can duplicate the packet into first and second packets. At step 312, virtual switch 275 sends the first packet to a first NIC (one of NICs 264) for transmission over a first network (e.g., LAN 112) and the second packet to a second NIC (one of NICs 264) for transmission over a second network (e.g., LAN 114). For example, at step 314, the first thread of virtual switch 275 can send the first and second packets to the first and second NICs, respectively.

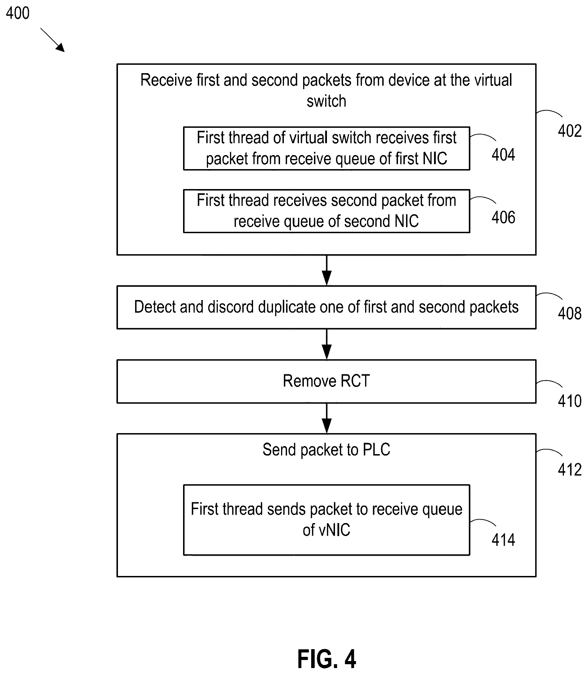

Fig. 4 is a flow diagram depicting a method 400 of handling packet reception in a computing system according to some embodiments. Method 400 begins at step 402, where virtual switch 275 can receive first and second packets from a device 116 at virtual switch 275. For example, at step 404, a first thread (one of threads 278) can receive the first packet from a receive queue of a first NIC (one of NICs 264). At step 406, the first thread can receive the second packet from a receive queue of the second NIC (another one of NICs 264). At step 408, virtual switch 275 can detect and discard a duplicate one of the first and second packets. For example, virtual switch 275 can detect the same sequence number in the RCT of each packet. At step 410, virtual switch 275 can remove the RCT from the remaining packet. At step 412, virtual switch 275 can send the remaining packet to PLC 106. For example, at step 414, the first thread of virtual switch 275 can send the remaining packet to a receive queue of vNIC 210.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Certain embodiments as described above involve a hardware abstraction layer on top of a host computer. The hardware abstraction layer allows multiple contexts to share the hardware resource. These contexts can be isolated from each other, each having at least a user application running therein. The hardware abstraction layer thus provides benefits of resource isolation and allocation among the contexts. Virtual machines may be used as an example for the contexts and hypervisors may be used as an example for the hardware abstraction layer. In general, each virtual machine includes a guest operating system in which at least one application runs. It should be noted that these embodiments may also apply to other examples of contexts, such as containers. Containers implement operating system-level virtualization, wherein an abstraction layer is provided on top of a kernel of an operating system on a host computer or a kernel of a guest operating system of a VM. The abstraction layer supports multiple containers each including an application and its dependencies. Each container runs as an isolated process in userspace on the underlying operating system and shares the kernel with other containers. The container relies on the kernel's functionality to make use of resource isolation (CPU, memory, block I/O, network, etc.) and separate namespaces and to completely isolate the application's view of the operating environments. By using containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. In some cases, if and where relevant, "virtualized computing instance" can encompass both VMs and containers.

Although one or more embodiments have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A computing system, comprising:
a hardware platform having a central processing unit (CPU), a memory, a first network interface controller (NIC) coupled to a first network, and a second NIC coupled to a second network;
software executing on the hardware platform, the software including a hypervisor and a virtual machine (VM) managed by the hypervisor, the software including first software executing in the VM and configured to send a packet to a device, the software including a virtual switch executing in the hypervisor;
wherein the virtual switch is configured to
receive the packet from the first software,
insert a sequence number in the packet,
duplicate the packet into a first packet and a second packet,
send the first packet to the device over the first network through the first NIC, and send the second packet to the device over the second network through the second NIC.

2. The computing system of claim 1, wherein
the VM is configured to execute a virtual NIC, and wherein the virtual switch includes a thread executing on the CPU configured to
receive the packet from a transmit queue of the vNIC,
send the first packet to the first NIC, and
send the second packet to the second NIC.

3. The computing system of claim 1 or 2, wherein
the CPU includes a plurality of processors, and wherein at least one of the plurality of processors exclusively executes the virtual switch.

4. The computing system of any one of the claims 1 to 3, wherein
the first software is configured to receive another packet from the device, and wherein the virtual switch is configured to:
receive, from the first NIC, a third packet from the first network;
receive, from the second NIC, a fourth packet from the second network, the third packet and the fourth packet being the other packet and a duplicate of the other packet;
discard the duplicate of the other packet; and
send the other packet to the first software.

5. The computing system of claim 4, wherein
the virtual switch is configured to remove a portion of a header of the other packet prior to sending the other packet to the first software.

6. The computing system of any one of the claims 1 to 5, wherein
the first network and the second network are independent.

7. The computing system of any one of the claims 1 to 6, wherein
the CPU includes a plurality of processors, and wherein at least one of the plurality of processors exclusively executes the VM.

8. The computing system of any one of the claims 1 to 7, wherein
the virtual switch is configured to send third packets over at least one of the first and second networks, the third packets indicating status of the first software.

9. The computing system of any one of the claims 1 to 8, wherein
the virtual switch is configured to receive third packets from the device, and wherein the virtual switch is configured to drop at least one of the third packets that is out-of-order.

10. The computing system of any one of the claims 1 to 9, wherein
the VM is migrated to the computing system from another computing system.

11. A method of processing packets in a computing system, comprising:
sending, by first software executing in a virtual machine (VM), a packet towards a device, the VM managed by a hypervisor executing on a hardware platform of a computer, the hardware platform including a central processing unit (CPU), a memory, a first network interface controller (NIC) coupled to a first network, and a second NIC coupled to a second network;
receiving, at a virtual switch of the hypervisor, the packet from the first software;
inserting, by the virtual switch, a sequence number in the packet;
duplicating, by the virtual switch, the packet into a first packet and a second packet;
sending, by the virtual switch, the first packet over the first network through the first NIC; and
sending, by the virtual switch, the second packet over the second network through the second NIC.

12. The method of claim 11, wherein
the VM is configured to execute a virtual NIC, and wherein the virtual switch includes a thread executing on the CPU configured to receive the packet from a transmit queue of the vNIC, send the first packet to the first NIC, and send the second packet to the second NIC.

13. The method of claim 11 or 12, wherein
the CPU includes a plurality of processors, and wherein at least one of the plurality of processors exclusively executes the virtual switch.

14. The method of any one of the claims 11 to 13, wherein
the first software is configured to receive another packet from the device, and method comprising:
receiving, at the virtual switch from the first NIC, a third packet from the first network;
receiving, at the virtual switch from the second NIC, a fourth packet from the second network,
the third packet and the fourth packet being the other packet and a duplicate of the other packet;
discarding, at the virtual switch, the duplicate of the other packet; and
sending, by the virtual switch, the other packet to the first software.

15. A non-transitory computer readable medium comprising instructions to be executed in a computing device to cause the computing device to carry out a method as set forth in any one pf the preceding method claims.
